# EUROPEAN PATENT APPLICATION

(11) **EP 4 847 321 A1**
(43) Date of publication of application: **02.12.2026**
(21) Application number: 25749148.0
(22) Date of filing: 23.01.2025
(51) Int. Cl.: B60R 1/27, H04N 13/111, H04N 13/156, H04N 13/243

(54) **AROUND VIEW IMAGE DISPLAY DEVICE FOR ARTICULATED DUMP TRUCK AND AROUND VIEW IMAGE DISPLAY METHOD**

(30) Priority: 29.01.2024 KR 20240013512
(71) Applicant: HD Construction Equipment Co., Ltd., Seongnam-si, Gyeonggi-do 13553 (KR)
(72) Inventor: LEE, Sanghoon, Yongin-si Gyeonggi-do 16892 (KR); JUNG, Joonyong, Seoul 07930 (KR)
(74) Representative: Isarpatent
(86) International application number: PCT/KR2025/001274
(87) International publication number: WO 2025/165061

(57) **Abstract**

Disclosed is an around view image display apparatus, comprising a plurality of cameras installed at positions configured to photograph a blind area between a front frame and a rear frame of the articulated dump truck and a periphery of the articulated dump truck and a processing device communicatively connected to the plurality of cameras, wherein the processing device is configured to acquire a plurality of images from the plurality of cameras, generate a synthesized image by synthesizing the plurality of images using a pre-implemented 3D model and output the generated synthesized image by using a preset device.

## Description

### [Technical Field]

Embodiments of the present disclosure relate to an around view image display apparatus for an articulated dump truck and an around view image display method for an articulated dump truck.

### [Background Art]

In general, in an earthwork environment, construction machines such as a dozer, a loader, an excavator, a grader, a dump truck, and an articulated dump truck are mainly utilized. In particular, a dump truck in which a front frame and a rear frame are connected by a hinge and a left-right direction change is performed through a steering cylinder is referred to as an articulated dump truck.

While a general dump truck changes a direction by turning front wheels, since the articulated dump truck changes a direction by turning a front head, it may easily move in a narrow site and secure an efficient moving line by reducing a turning radius.

Since a camera is not installed between a cabin included in the front frame and a dump included in the rear frame in an existing articulated dump truck, a problem occurs in that a blind area that an articulated dump truck driver cannot see is formed between the cabin included in the front frame and the dump included in the rear frame in the articulated dump truck.

### [DISCLOSURE]

### [Technical Problem]

The present disclosure is invented to solve the above-described problems, and one object of the present disclosure is to provide an around view image display apparatus and an around view image display method configured to display an image of a blind area between a cabin included in a front frame of an articulated dump truck and a dump included in a rear frame by using a synthesized image obtained by synthesizing a plurality of images.

In addition, another object of the present disclosure is to provide an around view image display apparatus and an around view image display method configured to display a front synthesized image generated by synthesizing images generated by at least two cameras located on the same line based on moving speed information of the articulated dump truck.

In addition, still another object of the present disclosure is to provide an around view image display apparatus and an around view image display method configured to display by combining a partial synthesized image generated by synthesizing images generated by four cameras located in a preset zone based on transmission information and an image generated by a camera located at a rear of a construction machine.

### [Technical Solution]

To achieve the above objects, according to an embodiment of the present disclosure, an around view image display apparatus for an articulated dump truck includes a plurality of cameras installed at positions configured to photograph a blind area between a front frame and a rear frame of the articulated dump truck and a periphery of the articulated dump truck, and a processing device communicatively connected to the plurality of cameras, and the processing device may acquire a plurality of images from the plurality of cameras, generate a synthesized image by synthesizing the plurality of images using a pre-implemented 3D model, and output the generated synthesized image by using a preset device.

In addition, the processing device may acquire a first image and a second image generated by two cameras located on the same line in a longitudinal direction of the articulated dump truck and configured to photograph a front of the articulated dump truck, wherein one camera is configured to photograph to be the same as a sight of a driver and the other camera is configured to photograph a front blind area where the sight of the driver is obscured by a cabin, and may generate a front synthesized image having no blind area by synthesizing the first image and the second image using the pre-implemented 3D model.

In addition, the processing device may acquire a moving speed of the articulated dump truck, compare the acquired moving speed of the articulated dump truck with preset speed information, and output the front synthesized image by using the preset device according to a comparison result.

In addition, the processing device may acquire images generated by at least four cameras located in a preset zone among the plurality of cameras, and generate a partial synthesized image by synthesizing the determined four images using the pre-implemented 3D model.

In addition, the processing device may cause the partial synthesized image to include the blind area between the front frame and the rear frame of the articulated dump truck.

In addition, the processing device may acquire transmission information of the articulated dump truck, compare the acquired transmission information with preset transmission information, and simultaneously output the generated partial synthesized image and a preset image among the plurality of images according to a comparison result.

In addition, when the acquired transmission information is the same as the preset transmission information, the processing device may simultaneously output the partial synthesized image and an image photographing a rear of the articulated dump truck among the plurality of images.

According to another embodiment of the present disclosure, an around view image display method of an articulated dump truck may include acquiring a plurality of images corresponding to each of a plurality of cameras from the plurality of cameras installed at positions configured to photograph a blind area between a front frame and a rear frame of the articulated dump truck and a periphery of the articulated dump truck, generating a synthesized image by synthesizing the plurality of images using a pre-implemented 3D model, and outputting the generated synthesized image by using a preset device.

In addition, the generating of the synthesized image may include acquiring a first image and a second image generated by two cameras, among the plurality of cameras, located on the same line in a longitudinal direction of the articulated dump truck and configured to photograph a front of the articulated dump truck, wherein one camera is configured to photograph to be the same as a sight of a driver and the other camera is configured to photograph a front blind area where the sight of the driver is obscured by a cabin, and generating a front synthesized image having no blind area by synthesizing the first image and the second image using the pre-implemented 3D model.

In addition, the outputting of the generated synthesized image by using the preset device may include acquiring a moving speed of the articulated dump truck, and when the acquired moving speed of the articulated dump truck is faster than a preset speed, outputting the front synthesized image having no blind area by using the preset device.

In addition, the generating of the synthesized image may include acquiring images generated by at least four cameras located in a preset zone among the plurality of cameras, and generating a partial synthesized image by synthesizing the acquired four images using the pre-implemented 3D model.

In addition, the partial synthesized image may include the blind area between the front frame and the rear frame of the articulated dump truck.

In addition, the outputting of the generated partial synthesized image by using the preset device may include acquiring transmission information of the articulated dump truck, and comparing the acquired transmission information with preset transmission information, and simultaneously outputting the generated partial synthesized image and a preset image among the plurality of images according to a comparison result.

In addition, the preset transmission information indicates reverse, and the outputting of the generated partial synthesized image by using the preset device may include, when the acquired transmission information is the same as the preset transmission information, simultaneously outputting the partial synthesized image and an image photographing a rear of the articulated dump truck among the plurality of images.

### [Advantageous Effects]

According to an embodiment of the present disclosure, there is an effect that an image of a blind area between a cabin included in a front frame of an articulated dump truck and a dump included in a rear frame may be displayed by using a synthesized image obtained by synthesizing a plurality of images.

In addition, there is an effect that a front synthesized image generated by synthesizing images generated by at least two cameras located on the same line based on moving speed information of a construction machine may be displayed.

In addition, there is an effect that a partial synthesized image generated by synthesizing images generated by four cameras located in a preset zone based on transmission information and an image generated by a camera located at a rear of the construction machine may be combined and displayed.

### [Brief Description of the Drawings]

FIGS. 1A and 1B are views illustrating a state in which an around view image display apparatus operates according to an embodiment.
FIG. 2 is a view illustrating a configuration of an around view image display apparatus according to an embodiment.
FIGS. 3A and 3B are views illustrating a state in which a camera included in the around view image display apparatus is mounted on a construction machine according to an embodiment.
FIG. 4 is a view illustrating a state in which the around view image display apparatus simultaneously outputs a partial synthesized image and an image generated at a rear of the construction machine according to an embodiment.
FIG. 5 is a flowchart illustrating an around view image display method according to an embodiment.
FIG. 6 is a flowchart illustrating an around view image display method according to another embodiment.
FIG. 7 is a flowchart illustrating an around view image display method according to still another embodiment.

### [Description of Embodiments]

Specific structural or functional descriptions of the embodiments according to the concept of the present disclosure disclosed in the present specification are merely exemplified for the purpose of describing the embodiments according to the concept of the present disclosure, and the embodiments according to the concept of the present disclosure may be implemented in various forms and are not limited to the embodiments described in the present specification.

Since the embodiments according to the concept of the present disclosure may be subjected to various changes and may have various forms, the embodiments will be illustrated in the drawings and described in detail in the present specification. However, this is not intended to limit the embodiments according to the concept of the present disclosure to specific disclosure forms, and includes all changes, equivalents, or substitutes included in the spirit and technical scope of the present disclosure.

Terms such as first or second may be used to describe various components, but the components should not be limited by the terms. The terms are only for the purpose of distinguishing one component from another component, for example, without departing from the scope of rights according to the concept of the present disclosure, a first component may be referred to as a second component, and similarly, a second component may also be referred to as a first component.

When a component is referred to as being "connected" or "coupled" to another component, it should be understood that it may be directly connected or coupled to the other component, but another component may exist in the middle. On the other hand, when a component is referred to as being "directly connected" or "directly coupled" to another component, it should be understood that no other component exists in the middle. Other expressions describing the relationship between components, that is, "between" and "directly between" or "adjacent to" and "directly adjacent to" should also be interpreted in the same way.

The terms used in the present specification are merely used to describe specific embodiments, and are not intended to limit the present disclosure. A singular expression includes a plural expression unless the context clearly indicates otherwise.

In the present specification, terms such as "include" or "have" are intended to designate that a described feature, number, step, operation, component, part, or combination thereof exists, and it should be understood that they do not preclude in advance the possibility of the existence or addition of one or more other features, numbers, steps, operations, components, parts, or combinations thereof.

Unless defined otherwise, all terms used herein, including technical or scientific terms, have the same meaning as commonly understood by those skilled in the art to which the present disclosure pertains.

Terms such as those defined in generally used dictionaries should be interpreted as having meanings consistent with the meanings in the context of the related art, and are not interpreted in an ideal or excessively formal meaning unless clearly defined in the present specification.

In the following description, the same identification symbol means the same configuration, and unnecessary redundant description and description of known technologies will be omitted.

In the embodiments of the present disclosure, 'communication', 'communication network', and 'network' may be used in the same meaning. The three terms mean wired and wireless local area and wide area data transmission/reception networks capable of transmitting and receiving files among a user terminal, terminals of other users, and a download server.

Hereinafter, the present disclosure will be described in detail by describing preferred embodiments of the present disclosure with reference to the accompanying drawings.

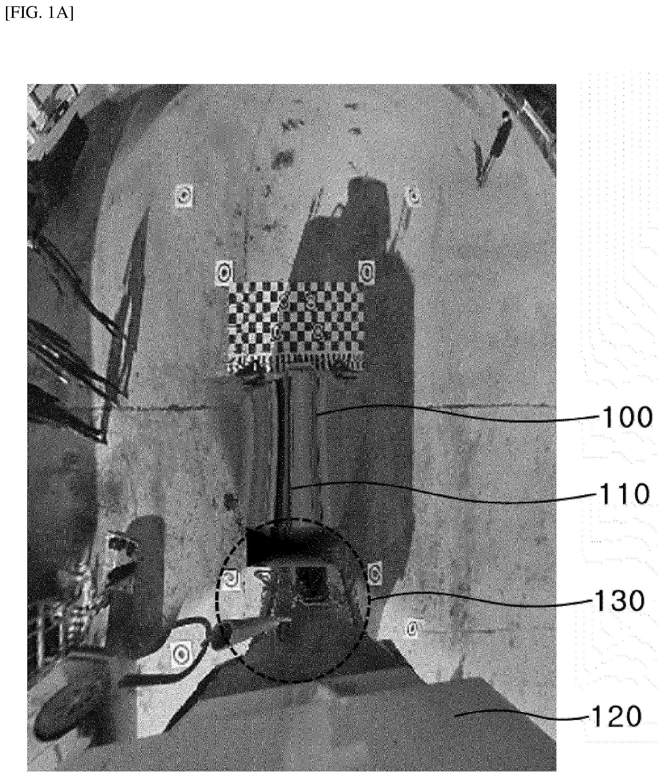

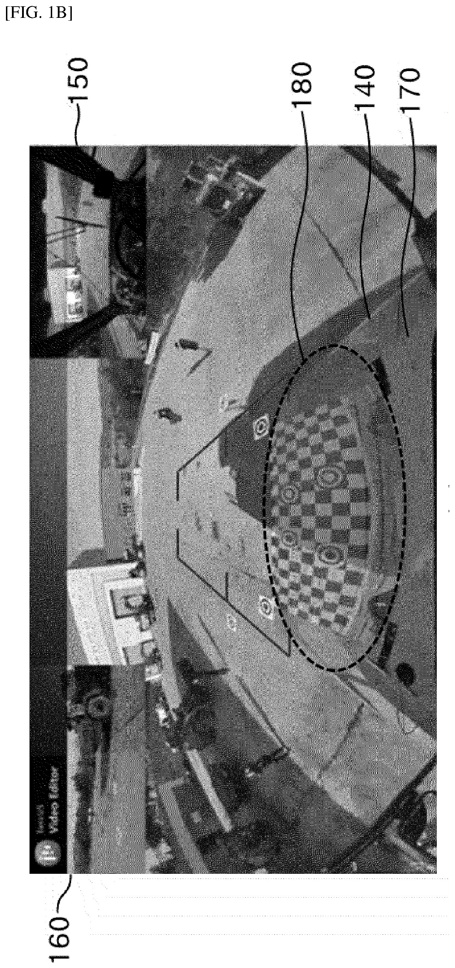

FIGS. 1A and 1B are views illustrating a state in which an around view image display apparatus operates according to an embodiment.

Referring to FIGS. 1A and 1B, the around view image display apparatus may output different images by using a preset device according to a moving speed of a construction machine.

Referring to FIG. 1A, when the moving speed of the construction machine is a low speed (for example, less than 10 km, etc.), the around view image display apparatus may output an around view image.

The around view image display apparatus may install cameras included in the around view image display apparatus at a front surface, a left surface, a right surface of a construction machine 100, and a position capable of photographing a blind area of the construction machine (for example, outside a cabin included in a front frame of an articulated dump truck, etc.).

The around view image display apparatus may acquire four images corresponding to each of the four cameras installed in the construction machine 100, and may generate a synthesized image by synthesizing the acquired four images using a pre-implemented 3D model. In addition, the around view image display apparatus may output the generated synthesized image by using a preset device.

The image output by the around view image display apparatus may include a blind area image of the construction machine 100. According to an embodiment, when the construction machine is the articulated dump truck in the image output by the around view image display apparatus, the blind area image may be an image 130 of an area between a cabin 110 included in the front frame and a dump 120 included in a rear frame.

Referring to FIG. 1B, when the moving speed of the construction machine is a high speed (for example, 10 km or more, etc.), the around view image display apparatus may output a construction machine front blind area image.

Since a construction machine (for example, an articulated dump truck, etc.) 140 has a driver's seat located at a very high position from the ground, a driver's sight 150 for a long distance from the construction machine (for example, the articulated dump truck, etc.) 140 is very good.

However, when a protruding portion such as a bonnet 170 exists in the construction machine (for example, the articulated dump truck, etc.) 140, a front blind area that the construction machine driver riding in the driver's seat cannot see may be formed 160 right in front of the construction machine (for example, the articulated dump truck, etc.) 140.

Referring to FIG. 1B, the around view image display apparatus may generate a synthesized image by synthesizing respective images acquired by cameras respectively installed on an upper portion of the driver's seat of the construction machine (for example, the articulated dump truck, etc.) 140 and a front bumper of the construction machine (for example, the articulated dump truck, etc.) 140, and may display 180 the generated synthesized image on the bonnet 170 of the construction machine (for example, the articulated dump truck, etc.) 140. In this way, when the synthesized image generated by synthesizing the respective images acquired by the cameras respectively installed on the upper portion of the driver's seat of the construction machine (for example, the articulated dump truck, etc.) 140 and the front bumper of the construction machine (for example, the articulated dump truck, etc.) 140 is displayed 180 on the bonnet 170 of the construction machine (for example, the articulated dump truck, etc.) 140, when the moving speed of the construction machine is a high speed (for example, 10 km or more, etc.), surrounding objects existing in the front blind area of the construction machine may be easily identified, thereby enabling safe construction machine driving.

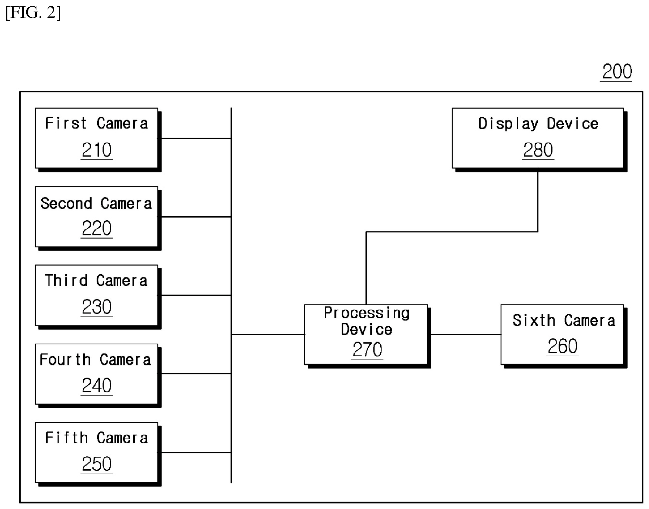

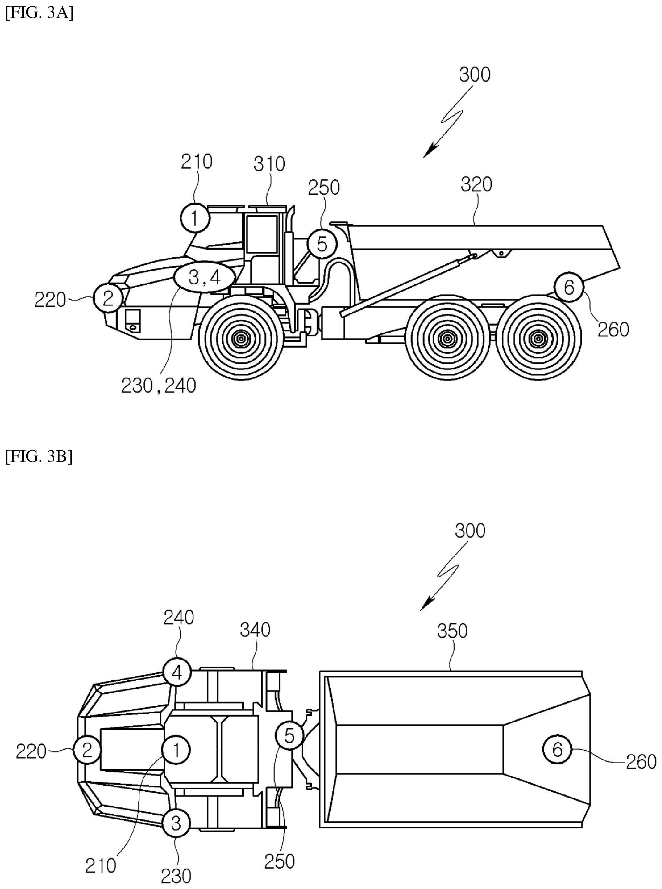

FIG. 2 is a view illustrating a configuration of an around view image display apparatus according to an embodiment, and FIGS. 3A and 3B are views illustrating a state in which a camera included in the around view image display apparatus is mounted on a construction machine according to an embodiment.

According to an embodiment, an around view image display apparatus 200 may be coupled to the construction machine as a separate independent device, or may be communicatively connected to the construction machine.

According to another embodiment, the around view image display apparatus 200 may be included in the construction machine.

Referring to FIG. 2, the around view image display apparatus 200 according to various embodiments may include a first camera 210, a second camera 220, a third camera 230, a fourth camera 240, a fifth camera 250, a sixth camera 260, a processing device 270, and a display device 280.

The first camera 210, the second camera 220, the third camera 230, the fourth camera 240, the fifth camera 250, the sixth camera 260, the processing device 270, and the display device 280 included in the around view image display apparatus 200 are interconnected with each other, and may transmit data to each other.

According to various embodiments, a plurality of cameras included in the around view image display apparatus may be installed at preset positions of the construction machine.

Referring to FIGS. 3A and 3B, a first camera 210 may be installed on an upper portion of a driver's seat of a construction machine (for example, an articulated dump truck, etc.). According to an embodiment, the first camera 210 may be installed on the upper portion of the driver's seat vertically above a head of a driver riding in the driver's seat of the construction machine (for example, the articulated dump truck, etc.). According to another embodiment, the first camera 210 may be installed on the upper portion of the driver's seat of the construction machine (for example, the articulated dump truck, etc.) to be in the same direction as a sight direction of the driver riding in the driver's seat of the construction machine (for example, the articulated dump truck, etc.). Due to the above-described position of the first camera 210, the first camera 210 may generate a first image corresponding to a sight of the driver riding in the driver's seat of the construction machine (for example, the articulated dump truck, etc.).

Referring to FIGS. 3A and 3B, a second camera 220 may be installed at a front bumper of the construction machine (for example, the articulated dump truck, etc.). The second camera 220 may be installed at the front bumper of the construction machine (for example, the articulated dump truck, etc.) to have a preset angle (for example, 45 degrees, etc.). Here, the preset angle is an angle that may be changed in consideration of a shape, size, etc. of the construction machine.

The second camera 220 may be installed at the front bumper of the construction machine (for example, the articulated dump truck, etc.) existing on the same line as the first camera 210 in a longitudinal direction of the construction machine. In this way, when the first camera 210 and the second camera 220 are located on the same line, camera calibration is easy, and since the cameras are arranged based on the same axis, it may be easy because there are physical reference coordinates during camera parameter modeling.

The second camera 220 may generate a second image corresponding to a front image of the construction machine (for example, the articulated dump truck, etc.). According to an embodiment, the second camera 220 may generate a second image corresponding to a front portion invisible to the driver of the construction machine due to a bonnet 170.

According to various embodiments, a third camera 230 may be installed on a left outside of the driver's seat of the construction machine (for example, the articulated dump truck, etc.), and a fourth camera 240 may be installed on a right outside of the driver's seat of the construction machine (for example, the articulated dump truck, etc.). According to an embodiment, the third camera 230 and the fourth camera 240 may be installed on the left and right outsides of the driver's seat of the construction machine (for example, the articulated dump truck, etc.) to exist on the same line as the first camera 210 in a width direction of the construction machine. In this way, when the first camera 210, the third camera 230, and the fourth camera 240 are located on the same line, camera calibration is easy, and since the cameras are arranged based on the same axis, it may be easy because there are physical reference coordinates during camera parameter modeling.

Due to the above-described positions of the cameras, the third camera 230 may generate a third image corresponding to a left outside image of the driver's seat of the construction machine (for example, the articulated dump truck, etc.), and the fourth camera 240 may generate a fourth image corresponding to a right outside image of the driver's seat of the construction machine (for example, the articulated dump truck, etc.).

According to various embodiments, a fifth camera 250 may be installed at a position where a blind area of the construction machine that cannot be seen by a general around view image display apparatus (for example, an area between a cabin included in a front frame and a dump included in a rear frame when the construction machine is an articulated dump truck, etc.) can be photographed (for example, outside the cabin included in the front frame when the construction machine is an articulated dump truck, etc.). According to an embodiment, the fifth camera 250 may be installed on an upper end outside the cabin so as to look down from above. The fifth camera 250 may generate a fifth image corresponding to an image of the blind area of the construction machine (for example, the area between the cabin included in the front frame of the articulated dump truck and the dump included in the rear frame, etc.).

According to various embodiments, a sixth camera 260 may be installed at a rear of the construction machine (for example, a dump included in a rear frame when the construction machine is an articulated dump truck, etc.). According to an embodiment, the sixth camera 260 may be installed at a position where a lower rear of the construction machine can be photographed (for example, below the dump included in the rear frame when the construction machine is an articulated dump truck, etc.). Accordingly, the sixth camera 260 may generate a sixth image corresponding to a lower rear image of the construction machine.

According to various embodiments, a processing device 270 may acquire at least two among a first image generated by the first camera 210, a second image generated by the second camera 220, a third image generated by the third camera 230, a fourth image generated by the fourth camera 240, a fifth image generated by the fifth camera 250, and a sixth image generated by the sixth camera 260.

The processing device 270 may generate a synthesized image by synthesizing at least two images among the first to sixth images using a pre-implemented 3D model. According to another embodiment, the processing device 270 may generate the synthesized image by synthesizing at least two images among the first to sixth images using the pre-implemented 3D model. The processing device 270 may generate the synthesized image by projecting the acquired at least two images onto a curved surface on the pre-implemented 3D model.

According to various embodiments, the processing device 270 may match each preset portion of the pre-implemented 3D model with each of the first to sixth images. In more detail, the processing device 270 may generate the synthesized image by projecting each of the first to sixth images matched with each preset portion of the pre-implemented 3D model onto a curved surface.

According to various embodiments, the processing device 270 may acquire an image obtained by photographing a calibration panel installed at a front of the construction machine to calibrate the pre-implemented 3D model. The processing device 270 may calculate a parameter of the 3D model based on the image obtained by photographing the calibration panel installed at the front of the construction machine. The processing device 270 may compare the calculated parameter of the 3D model with a parameter of the pre-implemented 3D model, and update the parameter of the pre-implemented 3D model according to a comparison result.

According to various embodiments, the processing device 270 may output the generated synthesized image by using a preset device. Here, the preset device may be a display device provided in the driver's seat of the construction machine, a Head Up Display (HUD) device, a Head Mounted Display (HMD) device, an image output device configured to output the synthesized image to a bonnet of the construction machine, etc., but the preset device is not limited thereto.

According to various embodiments, the processing device 270 may be communicatively connected to the construction machine, and acquire moving speed information of the construction machine from the construction machine. When the acquired moving speed of the construction machine is slower than a preset speed (for example, 10 km, etc.), the processing device 270 may output the generated synthesized image by using the preset device. Here, the preset device may be a display device provided in the driver's seat of the construction machine, a Head Up Display (HUD) device, a Head Mounted Display (HMD) device, an image output device configured to output the synthesized image to the bonnet of the construction machine, etc., but the preset device is not limited thereto.

According to various embodiments, the processing device 270 may determine images generated by at least two cameras located on the same line among a plurality of cameras. According to an embodiment, the processing device 270 may determine the first image and the second image as images located on the same line. The processing device 270 may generate a front synthesized image by combining the first image and the second image using the pre-implemented 3D model.

The processing device 270 may compare the acquired moving speed of the construction machine with the preset speed, and output the front synthesized image by using the preset device according to a comparison result. When the acquired moving speed of the construction machine is faster than the preset speed (for example, 10 km, etc.), the processing device 270 may output the generated front synthesized image by using the preset device. Here, the preset device may be a display device provided in the driver's seat of the construction machine, a Head Up Display (HUD) device, a Head Mounted Display (HMD) device, an image output device configured to output the synthesized image to the bonnet of the construction machine, etc., but the preset device is not limited thereto.

According to various embodiments, the processing device 270 may determine images generated by at least four cameras located in a preset zone among the plurality of cameras. The processing device 270 may determine the second to fifth images as images generated by at least four cameras located in the preset zone. The processing device 270 may generate a partial synthesized image by combining the second to fifth images using the pre-implemented 3D model. The processing device 270 may generate the partial synthesized image by projecting the second to fifth images onto a curved surface on the pre-implemented 3D model. According to an embodiment, the processing device 270 may match each preset portion of the pre-implemented 3D model with each of the second to fifth images. In more detail, the processing device 270 may generate the partial synthesized image by projecting each of the second to fifth images matched with each preset portion of the pre-implemented 3D model onto a curved surface.

According to various embodiments, the processing device 270 may acquire transmission information of the construction machine from the construction machine. The processing device 270 may compare the acquired transmission information of the construction machine with preset transmission information, and simultaneously output the generated partial synthesized image and a preset image by using the preset device according to a comparison result. Here, the preset image may be the sixth image which is an image photographing a rear of the construction machine, but the preset image is not limited thereto. When the acquired transmission information of the construction machine matches the preset transmission information (for example, reverse), the processing device 270 may simultaneously output the generated partial synthesized image and the preset image by using the preset device. Here, the preset image may be the sixth image, but the preset image is not limited thereto. In addition, the preset device may be a display device provided in the driver's seat of the construction machine, a Head Up Display (HUD) device, a Head Mounted Display (HMD) device, an image output device configured to output the synthesized image to the bonnet of the construction machine, etc., but the preset device is not limited thereto.

According to various embodiments, a display device 280 may display an image generated by the processing device 270. The display device 280 may be a display device provided in the driver's seat of the construction machine, a Head Up Display (HUD) device, a Head Mounted Display (HMD) device, an image output device configured to output the synthesized image to the bonnet of the construction machine, etc., but the display device 280 is not limited thereto.

According to various embodiments, the display device 280 may include a monitor, a touch screen, a mouse, an electronic pen, a microphone, a keyboard, a speaker, an earphone, a headphone, or a touch pad, and may acquire a user input.

The display device 280 may be provided integrally with the around view image display apparatus, or may be provided separately from the around view image display apparatus. According to an embodiment, the display device 280 may be provided in the construction machine.

It is apparent to those skilled in the art to which the present disclosure pertains that the term 'device or module' used herein represents a logical configuration unit and is not necessarily a physically separated component.

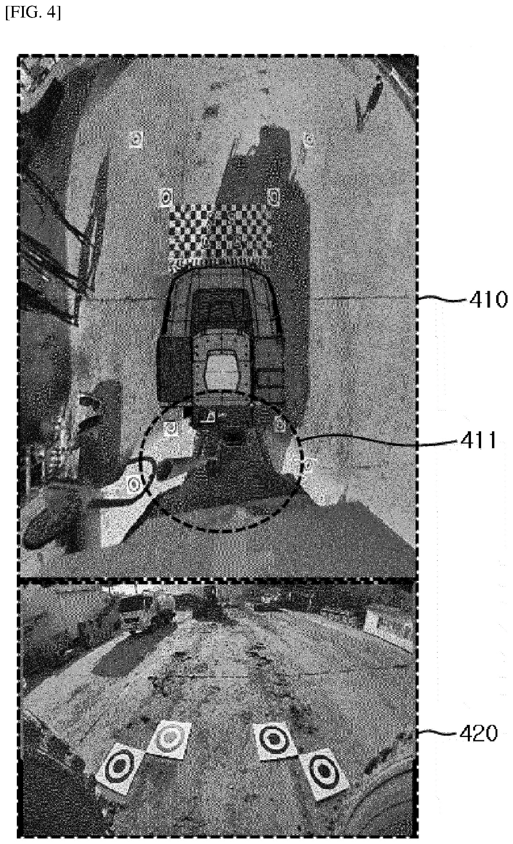

FIG. 4 is a view illustrating a state in which the around view image display apparatus simultaneously outputs a partial synthesized image and an image generated at a rear of the construction machine according to an embodiment.

Referring to FIG. 4, the around view image display apparatus 200 may acquire a first image and/or a second image photographing a front of the construction machine from a first camera 210 and/or a second camera 220 of the construction machine (for example, an articulated dump truck, etc.). In addition, the around view image display apparatus 200 may acquire a third image and a fourth image from a third camera 230 and a fourth camera 240 installed on a left outside and a right outside of a driver's seat of the construction machine. The around view image display apparatus 200 may acquire a fifth image from a fifth camera 250 installed at a position capable of photographing a blind area of the construction machine (for example, an area 411 between a cabin 110 included in a front frame and a dump 120 included in a rear frame).

The around view image display apparatus 200 may generate a partial synthesized image by combining the first to fifth images using a pre-implemented 3D model.

According to an embodiment, the around view image display apparatus 200 may generate the partial synthesized image by projecting the first to fifth images onto a curved surface on the pre-implemented 3D model. The around view image display apparatus 200 may match each preset portion of the pre-implemented 3D model with each of the first to fifth images. In more detail, the around view image display apparatus 200 may generate a partial synthesized image 410 by projecting each of the first to fifth images matched with each preset portion of the pre-implemented 3D model onto a curved surface.

Referring to FIG. 4, when the construction machine is the articulated dump truck in the partial synthesized image 410 output by the around view image display apparatus 200, the partial synthesized image 410 generated by the around view image display apparatus 200 may include an image of the area 411 between the cabin included in the front frame and the dump included in the rear frame.

Referring to FIG. 4, the around view image display apparatus 200 may simultaneously output the generated partial synthesized image 410 and a sixth image 420 acquired from a sixth camera installed at a rear of the construction machine (for example, a dump included in a rear frame when the construction machine is an articulated dump truck, etc.) by using a preset device. Here, the preset device may be a display device provided in the driver's seat of the construction machine, a Head Up Display (HUD) device, a Head Mounted Display (HMD) device, an image output device configured to output the synthesized image to a bonnet of the construction machine, etc., but the preset device is not limited thereto.

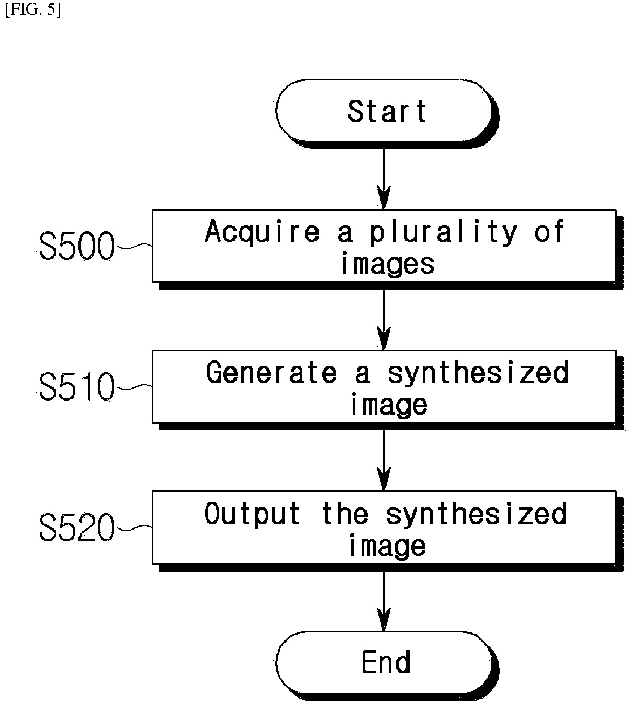

FIG. 5 is a flowchart illustrating an around view image display method according to an embodiment.

Referring to FIG. 5, the around view image display method according to an embodiment may include a step S500 of acquiring, by an around view image display apparatus 200, a plurality of images corresponding to each of a plurality of cameras from the plurality of cameras installed at preset positions of a construction machine, a step S510 of generating, by the around view image display apparatus 200, a synthesized image by synthesizing the plurality of images using a pre-implemented 3D model, and a step S520 of outputting, by the around view image display apparatus 200, the generated synthesized image by using a preset device.

In step S500, the around view image display apparatus 200 may acquire first to sixth images from six cameras installed at the preset positions of the construction machine.

In step S510, the around view image display apparatus 200 may generate the synthesized image by synthesizing the acquired plurality of images using the pre-implemented 3D model.

In addition, the around view image display apparatus 200 may generate the synthesized image by projecting the first to sixth images onto a curved surface on the pre-implemented 3D model.

In addition, the around view image display apparatus 200 may match each preset portion of the pre-implemented 3D model with each of the first to sixth images.

In addition, the around view image display apparatus 200 may generate the synthesized image by projecting each of the second to sixth images matched with each preset portion of the pre-implemented 3D model onto a curved surface.

In step S520, the around view image display apparatus 200 may output the generated synthesized image by using the preset device. Here, the preset device may be a display device provided in a driver's seat of the construction machine, a Head Up Display (HUD) device, a Head Mounted Display (HMD) device, an image output device configured to output the synthesized image to a bonnet of the construction machine, etc., but the preset device is not limited thereto.

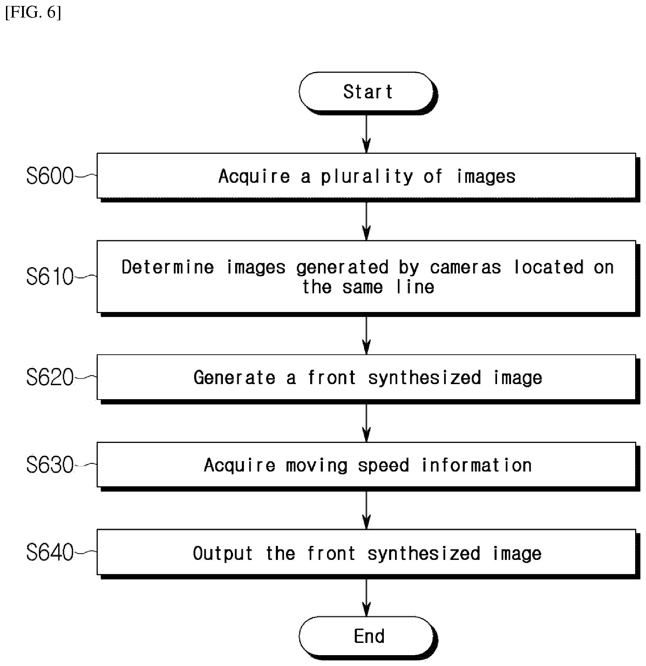

FIG. 6 is a flowchart illustrating an around view image display method according to another embodiment.

Referring to FIG. 6, the around view image display method according to an embodiment may include a step S600 of acquiring, by an around view image display apparatus 200, a plurality of images corresponding to each of a plurality of cameras from the plurality of cameras installed at preset positions of a construction machine, a step S610 of determining, by the around view image display apparatus 200, images generated by at least two cameras located on the same line among the plurality of cameras, a step S620 of generating, by the around view image display apparatus 200, a front synthesized image by synthesizing the plurality of images using a pre-implemented 3D model, a step S630 of acquiring, by the around view image display apparatus 200, moving speed information of the construction machine, and a step S640 of comparing, by the around view image display apparatus 200, the acquired moving speed information of the construction machine with preset speed information, and outputting the front synthesized image by using a preset device according to a comparison result.

In step S600, the around view image display apparatus 200 may acquire a first image from a first camera installed on an upper portion of a driver's seat of the construction machine.

In addition, the around view image display apparatus 200 may acquire a second image from a second camera installed at a front bumper of the construction machine.

In addition, the around view image display apparatus 200 may determine the first image and the second image as images generated by two cameras located on the same line.

In step S620, the around view image display apparatus 200 may generate a front synthesized image by combining the first image and the second image using the pre-implemented 3D model.

In step S630, the around view image display apparatus 200 may be communicatively connected to the construction machine to acquire a moving speed of the construction machine from the construction machine.

Although it is illustrated in FIG. 6 that steps S600 to S620 are performed before step S630, steps S600 to S620 and step S630 may be performed simultaneously, in parallel, or in an overlapping manner, or steps S600 to S620 may be performed later than step S630.

In step S640, when the acquired moving speed of the construction machine is faster than a preset speed (for example, 10 km, etc.), the around view image display apparatus 200 may output the generated front synthesized image by using the preset device. Here, the preset device may be a display device provided in the driver's seat of the construction machine, a Head Up Display (HUD) device, a Head Mounted Display (HMD) device, an image output device configured to output the synthesized image to a bonnet of the construction machine, etc., but the preset device is not limited thereto.

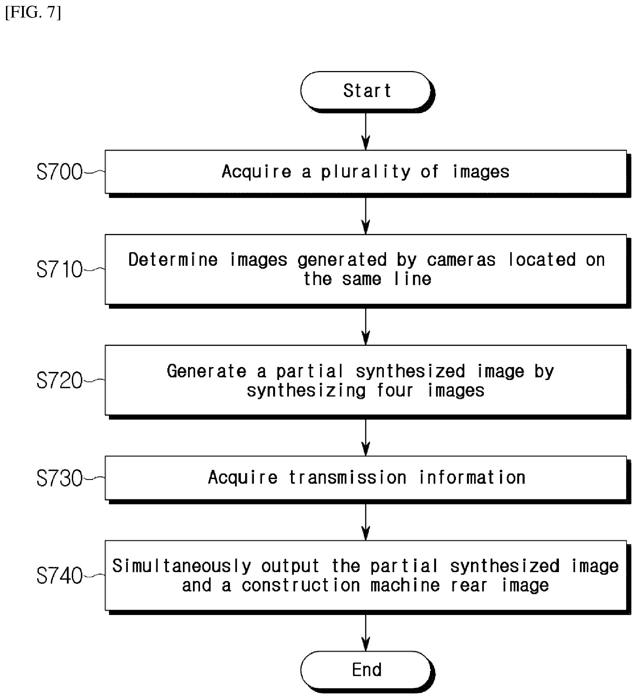

FIG. 7 is a flowchart illustrating an around view image display method according to still another embodiment.

Referring to FIG. 7, the around view image display method according to an embodiment includes a step S700 of acquiring, by an around view image display apparatus 200, a plurality of images corresponding to each of a plurality of cameras from the plurality of cameras installed at preset positions of a construction machine, a step S710 of determining, by the around view image display apparatus 200, images generated by at least four cameras located in a preset zone, a step S720 of generating, by the around view image display apparatus 200, a partial synthesized image by synthesizing the plurality of images using a pre-implemented 3D model, a step S730 of acquiring, by the around view image display apparatus 200, transmission information of the construction machine, and a step S740 of comparing, by the around view image display apparatus 200, the acquired transmission information with preset transmission information, and simultaneously outputting the generated partial synthesized image and a preset image among the plurality of images according to a comparison result.

In step S700, the around view image display apparatus 200 may acquire a second image from a second camera installed at a front bumper of the construction machine (for example, an articulated dump truck, etc.).

In addition, the around view image display apparatus 200 may acquire a third image and a fourth image from a third camera 230 and a fourth camera 240 respectively installed on a left outside and a right outside of a driver's seat of the construction machine.

In addition, the around view image display apparatus 200 may acquire a fifth image from a fifth camera 250 installed at a position capable of photographing a blind area of the construction machine (for example, an area between a cabin included in a front frame and a dump included in a rear frame when the construction machine is an articulated dump truck).

In step S710, the around view image display apparatus 200 may determine the second to fifth images as images generated by at least four cameras located in the preset zone.

In step S720, the around view image display apparatus 200 may generate a partial synthesized image by combining the second to fifth images using the pre-implemented 3D model.

In addition, the around view image display apparatus 200 may generate the partial synthesized image by projecting the second to fifth images onto a curved surface on the pre-implemented 3D model.

In addition, the around view image display apparatus may match each preset portion of the pre-implemented 3D model with each of the second to fifth images.

In addition, the around view image display apparatus may generate the partial synthesized image by projecting each of the second to fifth images matched with each preset portion of the pre-implemented 3D model onto a curved surface.

In step S730, the around view image display apparatus 200 may be communicatively connected to the construction machine to acquire transmission information of the construction machine.

Although it is illustrated in FIG. 7 that steps S700 to S720 are performed before step S730, steps S700 to S720 and step S730 may be performed simultaneously, in parallel, or in an overlapping manner, or steps S700 to S720 may be performed later than step S730.

In step S740, the around view image display apparatus 200 may compare the acquired transmission information of the construction machine with preset transmission information, and simultaneously output the generated partial synthesized image and a sixth image acquired from a sixth camera installed at a rear of the construction machine (for example, a dump included in a rear frame when the construction machine is an articulated dump truck, etc.) by using a preset device according to a comparison result. Here, the preset device may be a display device provided in the driver's seat of the construction machine, a Head Up Display (HUD) device, a Head Mounted Display (HMD) device, an image output device configured to output the synthesized image to a bonnet of the construction machine, etc., but the preset device is not limited thereto.

In the above description, although all components constituting the embodiments of the present disclosure have been described as being combined into one or operating in combination, the present disclosure is not necessarily limited to these embodiments. That is, within the scope of the object of the present disclosure, all the components may operate by being selectively combined into at least one.

In addition, although all the components may be respectively implemented as independent hardware, some or all of the respective components may be selectively combined and implemented as a computer program having a program module that performs some or all of combined functions in one or a plurality of pieces of hardware. Codes and code segments constituting the computer program may be easily inferred by those skilled in the art to which the present disclosure pertains.

Such a computer program may be stored in a computer-readable storage medium (Computer Readable Media), and read and executed by a computer, thereby implementing the embodiments of the present disclosure. The storage medium of the computer program may include a magnetic recording medium, an optical recording medium, and the like.

In addition, terms such as "include", "comprise", or "have" described above mean that the corresponding component may be inherent unless otherwise stated, and therefore, it should be construed that other components may be further included rather than excluding other components.

All terms including technical or scientific terms have the same meaning as commonly understood by those skilled in the art to which the present disclosure pertains, unless otherwise defined. Terms generally used, such as those defined in dictionaries, should be interpreted as being consistent with the contextual meaning of the related art, and are not interpreted in an ideal or excessively formal meaning unless clearly defined in the present disclosure.

The above description is merely an exemplary description of the technical spirit of the present disclosure, and various modifications and changes can be made by those skilled in the art to which the present disclosure pertains without departing from the essential characteristics of the present disclosure.

Therefore, the embodiments disclosed in the present disclosure are not intended to limit the technical spirit of the present disclosure but to describe it, and the scope of the technical spirit of the present disclosure is not limited by these embodiments. The protection scope of the present disclosure should be interpreted by the following claims, and all technical spirits within the equivalent scope should be interpreted as being included in the scope of rights of the present disclosure.

## Claims

1. An around view image display apparatus for an articulated dump truck, comprising:
a plurality of cameras installed at positions configured to photograph a blind area between a front frame and a rear frame of the articulated dump truck and a periphery of the articulated dump truck; and
a processing device communicatively connected to the plurality of cameras,
wherein the processing device is configured to:
acquire a plurality of images from the plurality of cameras;
generate a synthesized image by synthesizing the plurality of images using a pre-implemented 3D model; and
output the generated synthesized image by using a preset device.

2. The around view image display apparatus of claim 1,
wherein the processing device is further configured to:
acquire a first image and a second image generated by two cameras, among the plurality of cameras, located on the same line in a longitudinal direction of the articulated dump truck and configured to photograph a front of the articulated dump truck, wherein one camera is configured to photograph to be the same as a sight of a driver and the other camera is configured to photograph a front blind area where the sight of the driver is obscured by a cabin; and
generate a front synthesized image having no blind area by synthesizing the first image and the second image using the pre-implemented 3D model.

3. The around view image display apparatus of claim 2,
wherein the processing device is further configured to:
acquire a moving speed of the articulated dump truck;
compare the acquired moving speed of the articulated dump truck with preset speed information; and
output the front synthesized image by using the preset device according to a comparison result.

4. The around view image display apparatus of claim 1,
wherein the processing device is further configured to:
acquire images generated by at least four cameras located in a preset zone among the plurality of cameras; and
generate a partial synthesized image by synthesizing the acquired at least four images using the pre-implemented 3D model.

5. The around view image display apparatus of claim 4,
wherein the processing device is configured to cause the partial synthesized image to include the blind area between the front frame and the rear frame of the articulated dump truck.

6. The around view image display apparatus of claim 5,
wherein the processing device is further configured to:
acquire transmission information of the articulated dump truck;
compare the acquired transmission information with preset transmission information; and
simultaneously output the generated partial synthesized image and a preset image among the plurality of images according to a comparison result.

7. The around view image display apparatus of claim 6,
wherein the preset transmission information indicates reverse, and the processing device is configured to, when the acquired transmission information is the same as the preset transmission information, simultaneously output the partial synthesized image and an image photographing a rear of the articulated dump truck among the plurality of images.

8. An around view image display method, comprising:
acquiring a plurality of images corresponding to each of a plurality of cameras from the plurality of cameras installed at positions configured to photograph a blind area between a front frame and a rear frame of an articulated dump truck and a periphery of the articulated dump truck;
generating a synthesized image by synthesizing the plurality of images using a pre-implemented 3D model; and
outputting the generated synthesized image by using a preset device.

9. The around view image display method of claim 8,
wherein the generating of the synthesized image comprises:
acquiring a first image and a second image generated by two cameras, among the plurality of cameras, located on the same line in a longitudinal direction of the articulated dump truck and configured to photograph a front of the articulated dump truck, wherein one camera is configured to photograph to be the same as a sight of a driver and the other camera is configured to photograph a front blind area where the sight of the driver is obscured by a cabin; and
generating a front synthesized image having no blind area by synthesizing the first image and the second image using the pre-implemented 3D model.

10. The around view image display method of claim 9,
wherein the outputting of the generated synthesized image by using the preset device comprises:
acquiring a moving speed of the articulated dump truck; and
when the acquired moving speed of the articulated dump truck is faster than a preset speed, outputting the front synthesized image having no blind area by using the preset device.

11. The around view image display method of claim 8,
wherein the generating of the synthesized image comprises:
acquiring images generated by at least four cameras located in a preset zone among the plurality of cameras; and
generating a partial synthesized image by synthesizing the acquired at least four images using the pre-implemented 3D model.

12. The around view image display method of claim 11,
wherein the partial synthesized image includes the blind area between the front frame and the rear frame of the articulated dump truck.

13. The around view image display method of claim 12,
wherein the outputting of the generated partial synthesized image by using the preset device comprises:
acquiring transmission information of the articulated dump truck; and
comparing the acquired transmission information with preset transmission information, and simultaneously outputting the generated partial synthesized image and a preset image among the plurality of images according to a comparison result.

14. The around view image display method of claim 13,
wherein the preset transmission information indicates reverse, and
wherein the outputting of the generated partial synthesized image by using the preset device comprises when the acquired transmission information is the same as the preset transmission information, simultaneously outputting the partial synthesized image and an image photographing a rear of the articulated dump truck among the plurality of images.
